# EUROPEAN PATENT SPECIFICATION

(11) **EP 2 745 756 B1**
(45) Date of publication and mention of the grant of the patent: **08.07.2015**
(21) Application number: 13198378.5
(22) Date of filing: 19.12.2013
(51) Int. Cl.: A47J 37/10

(54) **Improved cooking vessel**
Verbesserter Kochbehälter
Récipient de cuisson améliorée

(30) Priority: 20.12.2012 IT AN20120166
(43) Date of publication of application: 25.06.2014
(73) Proprietor: Soprano, Massimiliano, 00040 Lariano (RM) (IT)
(72) Inventor: Soprano, Massimiliano, 00040 Lariano (RM) (IT)
(74) Representative: Baldi, Claudio

(56) References cited:
- US-A- 1 447 813
- US-A- 4 352 324
- US-A- 5 606 905
- US-A1- 2012 199 016

## Description

The present patent application for industrial invention relates to an improved cooking vessel. The present invention falls within the field of cooking vessels used to cook foodstuffs, and in particular of vessels normally defined as "grills" provided with a series of ribs or bulges or grooves on the cooking surface.

The peculiarity of said cooking vessels consists in the fact that the food disposed onto the cooking surface of said grills adheres to said cooking surface only in correspondence of said ribs. More precisely, the food disposed onto the cooking surface of a grill is partially cooked by contact, in correspondence of said bulges of the cooking surface, and partially cooked by irradiation, in correspondence of said grooves.

While the food is cooked, the grease that comes out of the food cooked onto the cooking surface of the grill is deposited in the grooves of said cooking surface, where it inevitably tends to get burned and encrusted. In view of the above, at the end of the cooking process, before reusing the grill to cook other food, the grill must be washed in order to eliminate the grease encrustations formed inside the grooves of the cooking surface. Consequently, the grill cannot be immediately reused after cooking and the time that elapses between two consecutive uses of the grill depends on the difficulty encountered by the user to remove said encrustations.

The burning process of the grease that stagnates inside the grooves of the cooking surface of a grill generates toxic smoke and vapor. In addition to being harmful when inhaled, the toxic smoke inevitably invests the food that is being cooked, forming carcinogenic substances and altering the organoleptic characteristics of the food.

US1447813 discloses a cooking utensil having a curvilinear convex cooking surface that comprises circular and radial grooves with constant width and ribs forming sharp corners. The circular grooves have an increasing depth going towards the periphery of the utensil so that the grease can flow towards the periphery of the utensil. The utensil also comprises a collecting pot that is integrally and permanently fitted to the utensil to collect grease. The radial grooves provided with constant width slow down the grease outflow and favor the formation of encrustations, especially in the sharp corners of the ribs. The pot is in close contact with the wall of the utensil and get overheated, making the grease boil. Moreover, the pot cannot be removed from the utensil to be emptied.

The utensil does not provide for any type of tang that protrudes externally from the surface of the utensil and is connected to the collection pot. Consequently, the grease drips between the utensil and the pot.

US5606905 discloses a cooking device including a cooking plate with tilted cooking surface, grooves with constant width and ribs with sharp corners. A grease collecting member is securely fitted to the device under the plate, in such manner that the grease drips by gravity from the plate to the collecting member without any protection and with the risk of burns for the user.

US2012/199016 discloses a cooking receptacle with convex cooking surface and grooves with constant width. Such a receptacle does not provide for a grease collecting pot.

US 4352324 discloses a pan without any grooves or ribs, which comprises a removable grease catcher coupled with the pan. The grease catcher is provided with a back curved wall that comes in close contact with the lateral wall of the pan, thus causing the oil contained in the grease catcher to overheat. The grease catcher is not provided with a cover and is positioned under the handle of the pan, with the risk of burns for the user who is holding the handle. Moreover, the grease catcher is connected to the pan with screw means that require the use of a screwdriver to mount and remove the grease catcher. In order to allow the cooking liquids to flow out, the pan must be tilted; otherwise the cooking liquids would stagnate on the entire cooking surface of the pan. The tilting of the pan is not a safe operation because the cooking liquids are uncontrollably conveyed or poured in the grease catcher.

The purpose of the present invention is to overcome the drawbacks of the prior art by devising a cooking vessel provided with a grease collection tub that is effective, efficacious, safe and reliable.

Another purpose of the present invention is to devise a cooking vessel that is capable of avoiding encrustations of cooking liquids and ensure healthy cooking and easy cleaning of the cooking vessel.

The cooking vessel of the invention comprises a lateral edge and a bottom, which comprises a central portion adapted to come in contact with the food to be cooked and a perimeter portion adapted to receive the grease coming out of the food that is being cooked.

More specifically, said central portion comprises a plurality of grooves with increasing depth towards the perimeter portion.

The cooking vessel also comprises a removable grease collection tub disposed in external position on said lateral edge and provided with a compartment where the grease is collected after passing through at least one through hole obtained on the lateral edge of the vessel.

For explanatory reasons, the description of the improved cooking vessel according to the invention continues with reference to the attached drawings, which only have an illustrative, not limiting value, wherein:
- Fig. 1 is an axonometric view of the improved cooking vessel of the invention;
- Fig. 2 is an axonometric view that shows a connection tang of the vessel according to the invention and an exploded view of the grease collection tub;
- Fig. 3 is a side view of the cooking vessel of Fig. 1 cut along a vertical plane passing through the center of the vessel and the center of the two grease collection tubs.
- Fig. 4 is a top view of a portion of the cooking surface of the cooking vessel according to a second embodiment of the invention;
- Fig. 5 is a cross-sectional view along plane V-V of Fig. 4;
- Fig. 6 is the same view as Fig. 2, except for it shows a second embodiment of the coupling mode between the tang of the vessel and the grease collection tub.

Referring to the attached figures, the improved cooking vessel of the invention is disclosed and generally indicated with reference numeral (1).

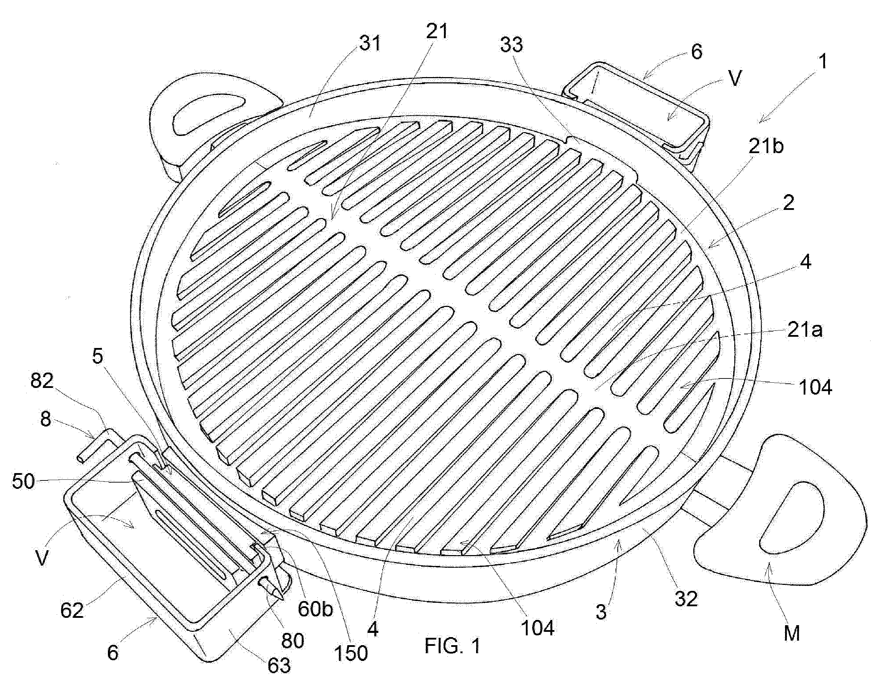

Referring to Fig. 1, the improved cooking vessel (1) comprises a bottom (2) and a lateral edge (3). Advantageously, the improved cooking vessel (1) of the invention has a circular shape.

The bottom (2) comprises an upper side (21) whereon the food to be cooked is positioned, and a lower side adapted to be faced towards the cooker.

The lateral edge (3) comprises an internal side (31) facing towards the upper side (21) of the bottom (2) of the cooking vessel and an external side (32).

As shown in Fig. 1, the upper side (21) of the bottom of the cooking vessel comprises a central portion (21 a) adapted to come in contact with the food to be cooked, and an annular perimeter portion (21 b) adapted to receive the grease coming out of the food that is being cooked.

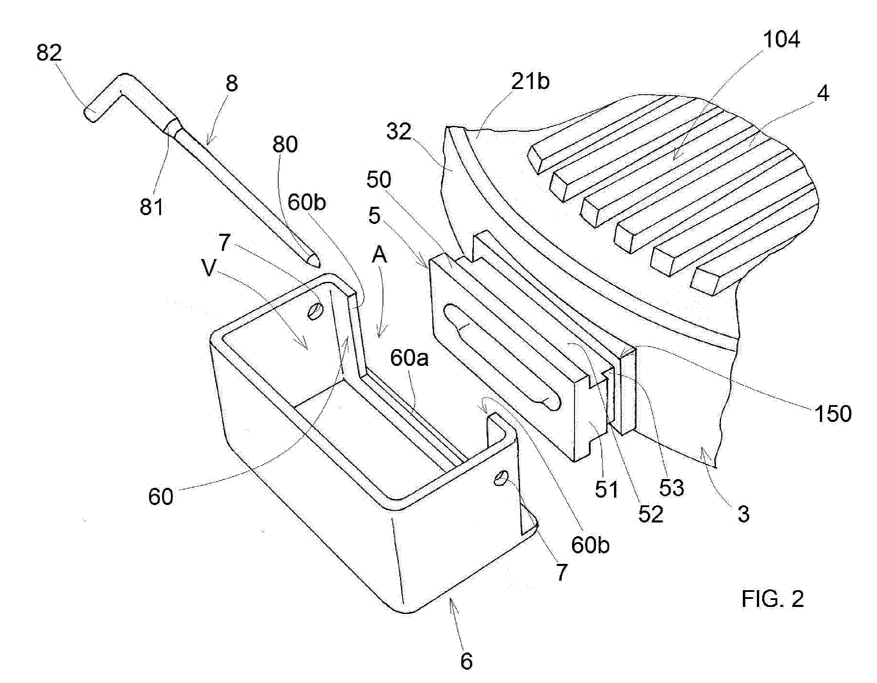

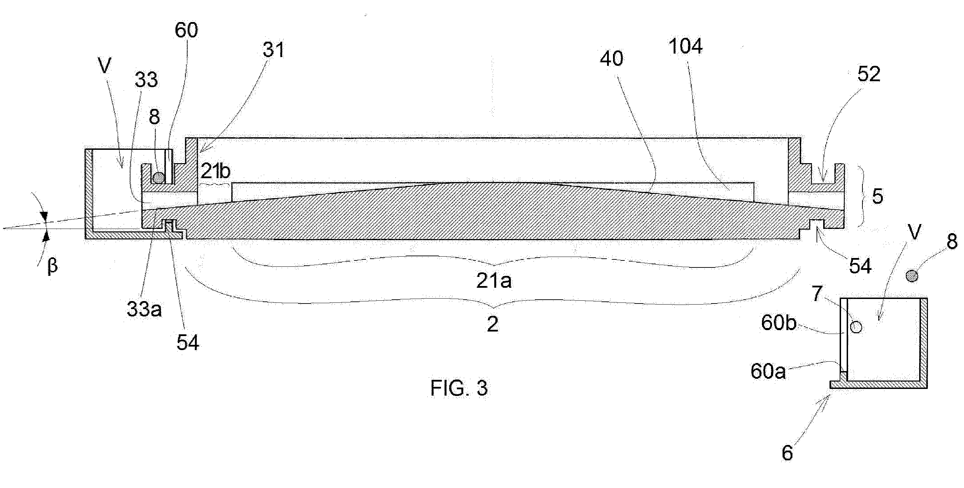

Referring to Figs. 2 and 3, the central portion (21 a) of the upper side of the bottom is provided with a plurality of grooves (4) with increasing depth towards the perimeter portion (21 b). The grooves (4) are defined between a plurality of ribs (104) with increasing height going towards the perimeter portion (21 b). Referring to Fig. 3, in the longitudinal section, each groove (4) has a rectilinear bottom surface with tilt angle (β) of approximately 2°- 6°to allow the grease to flow freely.

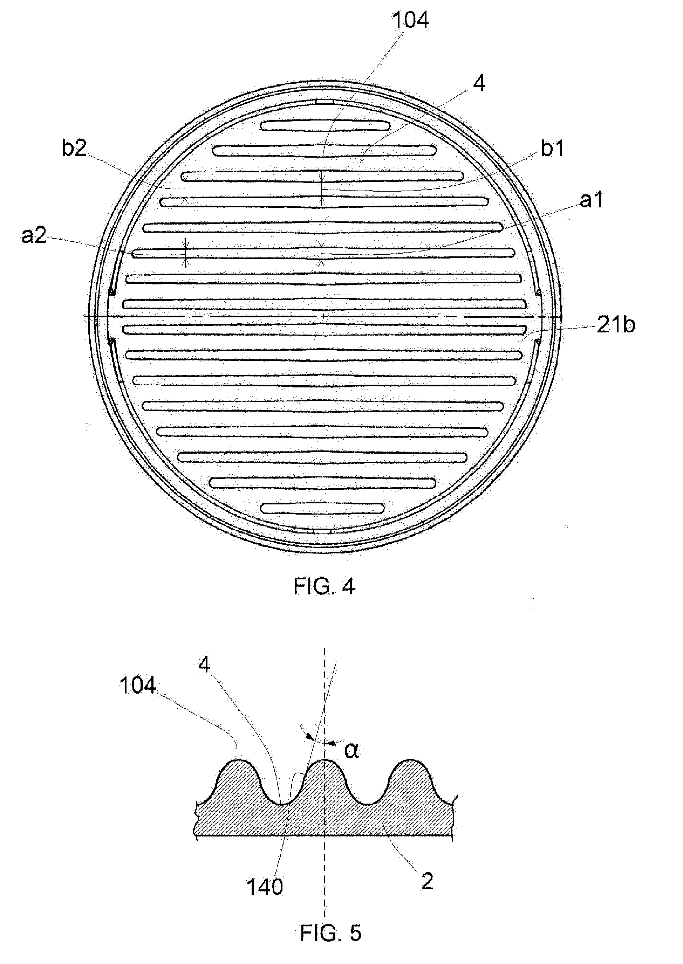

Referring to Figs. 4 and 5, according to a second embodiment of the invention, the ribs (104) have a decreasing width going towards the perimeter portion (21 b). Consequently, the grooves (4) have an increasing width going towards the perimeter portion (21 b), thus increasing the outflow and the speed of the grease towards the perimeter portion. The ribs (104) have a maximum width (a1) in the central part of the bottom (2) and a minimum width (a2) in proximity to the perimeter portion (21 b) of the bottom. For illustrative purposes, the maximum width (a1) of the ribs is 7.5 mm and the minimum width (a2) of the ribs is 6.5 mm. Similarly, the grooves (4) have a minimum width (b1) in the central part of the bottom (2) and a maximum width (b2) in proximity to the perimeter portion (21 b) of the bottom. For illustrative purposes, the minimum width (b1) of the grooves is 7.5 mm and the maximum width (b2) of the grooves is 8.5 mm.

Referring to Fig. 5, the ribs (104) and the grooves (4) have a cross-sectional sinusoidal profile in order not to form sharp corners where grease can get encrusted. The rounded upper part of the ribs minimizes the surface of the food in contact with the ribs and cooking is obtained by irradiation. The rounded lower part of the grooves favors the flow and ejection of grease from the vessel. According to a plan view, the ends of the ribs (104) have a rounded shape in order to avoid the formation of sharp corners that generate grease stagnation.

Each rib (104) has two lateral walls (140) not orthogonal to the plane of the vessel bottom. Each lateral wall (140) is tilted by an angle (α) relative to a vertical straight line in order to favor the grease flow. Advantageously, the angle (α) is comprised between 10° and 30°.

The special shape of the ribs (104) and the grooves (4) accelerates the outflow of the cooking liquids from the central portion to the perimeter portion (21 b) of the vessel in order to prevent the cooking liquids from stagnating on the central portion of the vessel and getting burnt, creating vapor and smoke that is toxic for the food and encrustations that are difficult to remove.

Going back to Fig. 1, the lateral edge (3) of the cooking vessel (1) is provided with at least one through hole (33) to drain the cooking liquids. The perimeter portion (21 b) has a higher width in correspondence of the through hole (33) in order to better receive the grease conveyed from the various grooves, avoiding the accumulation of grease that may get encrusted and burnt. The through hole (33) is shaped as a slot with rounded profile to avoid the formation of sharp corners where grease can stagnate.

The bottom (2) of the cooking vessel is provided with a portion (33a) in correspondence of the through hole (33) with downward inclination relative to the perimeter portion (21 b) of the bottom (2). The portion (33a) of the bottom follows the inclination of the grooves (4).

Referring to Fig. 1, the cooking vessel (1) comprises a connection tang (5) positioned in correspondence of the through hole (33) and protruding externally from the external side (32) of the lateral edge (3) of the cooking vessel.

Said connection tang (5) has a parallelepiped shape and comprises an upper horizontal wall (50) and two lateral vertical walls (51), substantially parallel and orthogonal to the upper wall (50).

Still with reference to Fig. 1, the cooking vessel (1) comprises a removable collection tub (6) mounted in the connection tang (5). The collection tub (6) is used to collect the grease coming out of the food that is cooked inside the cooking vessel. The connection tang (5) enters into the collection tub (6) to prevent the grease from dripping between the edge of the vessel and the tub.

Referring to Figs. 2 and 3, the collection tub (6) has a parallelepiped shape and is opened on top in order to define a grease collection compartment (V). The collection tub (6) has a back wall (60) provided with a U-shaped opening (A). The opening (A) has a horizontal border (60a) and two lateral vertical borders (60b) in opposite position. The connection tang (5) has two lateral vertical grooves (53) on the lateral walls (51) and a lower horizontal groove (54) on the lower wall. The tub is coupled with the tang (5) from down upwards, making the lateral vertical borders (60b) of the opening of the tub slide into the lateral vertical grooves (53) of the tang until the horizontal border (60a) of the opening of the tub is inserted into the lower horizontal groove (54) of the tang. In this way, the tang (5) is coupled into the opening (A) of the tub. The purpose of the lower horizontal groove (54) of the tang is to prevent the grease from dripping outwards from the tang and from the tub.

Referring to Fig. 1, the improved cooking vessel (1) comprises fast coupling/uncoupling means (8) for fast coupling and uncoupling of the collection tub (6) relative to the connection tang (5).

The fast coupling/uncoupling means (8) comprise a pin (8) that is inserted into two holes (7) obtained in the lateral walls of the tub, in order to be disposed on the upper wall (50) of the tang to prevent the tub from being removed. Optionally, the upper wall (50) of the tang is provided with an upper horizontal groove (52) into which the pin (8) is engaged for higher stability.

It must be noted that the vertical grooves (53) and the lower horizontal groove (54) of the tang (5) are spaced out from the lateral edge (3) of the vessel by means of a spacing flange (150). In this way, the back wall (60) of the tub (6) is spaced out from the lateral edge (3) of the vessel, thus minimizing the heat exchange and avoiding the overheating of the grease in the tub. Advantageously, the spacing flange (150) has a thickness of about 4 mm so that the tub (6) is separated from the lateral edge (3) by a suitable distance to prevent heat transmission.

The pin (8) is provided with a tapered end (80) to favor the insertion of the pin inside the two holes (7) and an enlarged portion (81) that acts as stop against the lateral wall of the tub to lock the insertion of the pin. The pin comprises a bent handle (82).

The operation of the cooking vessel is simple and intuitive. While cooking the food disposed on the central portion (21 a) of the upper side (21) of the bottom (2) of the cooking vessel (1), the grease that comes out of the food is deposited in the grooves (4) of the upper side (21). Because of the inclination of said grooves (4), the grease is conveyed into the perimeter portion (21 b) of the upper side (21) of the bottom (2). And because of the inclination of the perimeter portion (21 b), the grease is conveyed towards the through drain hole (33). Therefore, the grease crosses said through hole (33) and is collected inside the compartment (V) of the collection tub (6). When the food is ready, the pin (8) is removed from the holes (7) and the collection tub (6) is removed from the connection tang (5) in order to clean it and remove the grease collected during cooking.

Although this description refers to a single collection tub (6), the cooking vessel of the invention may be provided with two collection tubs (6).

Referring to Fig. 1, the central portion (21 a) of the cooking vessel (1) is provided with two identical series of parallel grooves (4). The lateral edge (3) is provided with two through drain holes (33) and two tangs (5) in correspondence of the holes, in diametrally opposite positions. Two collection tubs (6) are coupled to the two connection tangs (5).

The cooking vessel (1) comprises two handles (M) disposed in diametrally opposite positions and angularly spaced by 90° relative to the tubs (6). In this way the tubs are spaced out from the handles, avoiding risks of burns for the user.

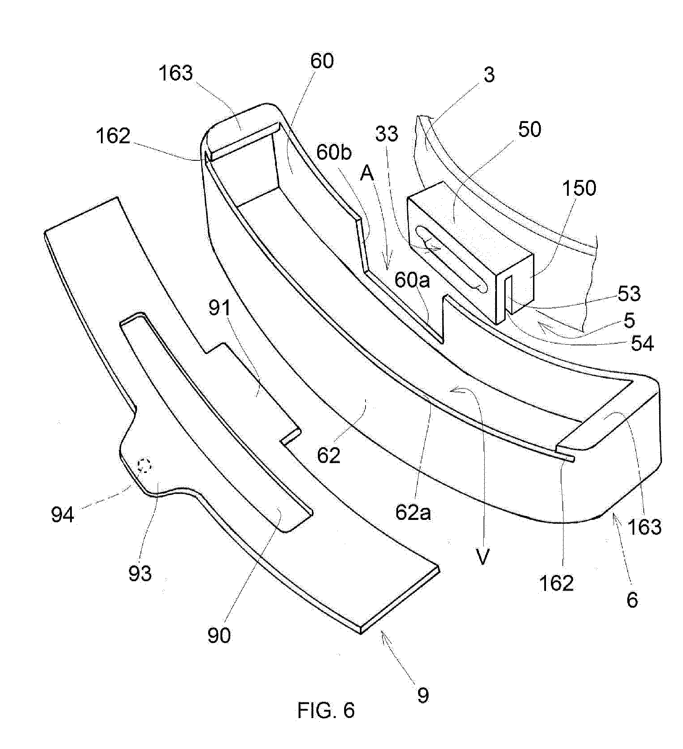

Fig. 6 shows a second embodiment of the tub, wherein elements that are identical or correspond to the elements described above are indicated with the same reference numerals. According to this embodiment of the invention, the fast coupling/uncoupling means comprise a plate-shaped cover (9).

The tub (6) comprises a front wall (62) with upper border (62a). The front wall (62) is provided with two notches (162) proximal to the lateral walls of the tub to receive the cover (9).

The notches (162) are provided with two wings (163) protruding inwards into the tub to hold the cover (9).

The cover (9) comprises a back wing (91) adapted to slide on the upper wall (50) of the tang (5).

The cover (9) comprises a front wing (93) provided with a locking pin (94) (shown with a broken line) that protrudes downwards to go over the upper border (62a) of the front wall of the tub and stop against the internal surface of the front wall (62) of the tub in order to hold the cover. In fact, when the cover slides inside the notches (162), the pin (94) comes in contact with the border (62a) of the front wall of the tub and the front wing (93) is elastically bent upwards, so that the pin (94) goes over the upper border (62a). Once the pin (94) has gone over the upper border (62a) of the front wall of the tub, the front wing (93) of the cover elastically returns to the initial position and the pin (94) stops against the internal surface of the front wall (62) of the tub.

The cover (9) has a hole (90) to inspect the grease collected in the tub.

The fast coupling/uncoupling means permit to remove the tub easily with one hand and without using any tools. Moreover, said fast coupling/uncoupling means prevent the accidental removal of the tub, guaranteeing safety.

It is worthless saying that the attached drawings only have an illustrative purpose and should not be considered in a limiting sense. Various modifications can be made to the present invention by an expert of the field, without leaving the protection scope of the attached claims.

## Claims

1. A cooking vessel (1) comprising:
- a bottom (2) with an upper side (21) adapted to receive the food to be cooked, and a lower side (22) adapted to be faced towards a cooker; said upper side (21) of said bottom (2) comprising a central portion (21 a) and a perimeter portion (21 b),
- a plurality of ribs (104) obtained in said central portion in such manner to define a plurality of grooves (4) with increasing depth towards said perimeter portion (21 b) of said bottom (2),
- a lateral edge (3) having at least one through drain hole (33),
- at least one collection tub (6) with a compartment (V) disposed outside said lateral edge (3) in correspondence of said at least one through hole (33),
**characterized in that** it comprises
fast coupling-uncoupling means (8; 9) for fast coupling and uncoupling of the tub (6) with respect to the vessel,
a spacing flange (150) externally protruding from the lateral wall (3) of the vessel to space out the tub (6) from the vessel, in such manner to minimize the heat exchange between the vessel and the tub.

2. The cooking vessel (1) of claim 1, comprising at least one connection tang (5) disposed in correspondence of said at least one through hole (33) of said lateral edge (3) and externally protruding from said lateral edge (3); said spacing flange (150) being obtained on the connection tang (5) and said collection tub (6) being provided with an opening (A) to receive said connection tang (5) in such manner that grease can fall in the tub without flowing between the tub and the lateral edge (3) of the vessel.

3. The cooking vessel (1) of claim 2, wherein said connection tang (5) has a parallelepiped shape and comprises two lateral vertical grooves (53) and one lower horizontal groove (54) and said opening (A) of the tub has a U-shape and comprises a horizontal edge (60a) and two lateral vertical edges (60b), respectively engaging in the lower horizontal groove (54) and in the lateral vertical grooves (53) of the tang, wherein said spacing flange (150) is disposed between the grooves (53, 54) of the connection tang and the lateral edge (3) of the vessel.

4. The cooking vessel (1) of claim 2 or 3, wherein said fast coupling-uncoupling means (9) comprise a plate-shaped cover provided with a back wing (91) that slides on an upper wall (50) of the connection tang.

5. The cooking vessel (1) of claim 4, wherein said tub (6) comprises a front wall (62) provided with upper edge (62a) and said cover comprises a front wing (93) provided with a lock pin (94) protruding in lower position to go over the upper edge (62a) of the front wall of the tub and stop against the internal surface of the front wall (62) of the tub.

6. The cooking vessel (1) of claim 5, wherein said front wall (62) of the tub (6) comprises two notches (162) for the insertion of the cover (9) and two lateral wings (163) protruding towards the inside of the tub above the notches (162) in order to hold the cover.

7. The cooking vessel (1) of claim 2 or 3, wherein said fast coupling-uncoupling means (8) comprise a pin that is inserted into two aligned holes (7) obtained on two lateral walls of the tub (6) and is engaged into an upper horizontal groove (52) obtained in said connection tang (5).

8. The cooking vessel (1) of any one of the preceding claims, wherein each rib (104) has a decreasing width going towards said perimeter portion (21 b) and each groove (4) has an increasing width going towards said perimeter portion (21 b), in such manner to increase the flow and the speed of the grease flowing towards the perimeter portion of the vessel.

9. The cooking vessel (1) of any one of the preceding claims, wherein the ribs (104) and the grooves (4) have a cross-sectional sinusoidal profile in order to avoid the formation of sharp corners and each rib (104) is provided with two lateral walls (140) tilted by an angle (α) with respect to a vertical straight line in order to favor the grease flow.

10. The cooking vessel (1) of any one of the preceding claims, comprising two tubs (6) disposed in diametrally opposite positions and two handles (M) disposed in diametrally opposite position and angularly spaced by 90° with respect to the tubs.

## Patentansprüche

1. Kochbehälter (1) umfassend:
- einen Boden (2) mit einer oberen Fläche (21), die dazu bestimmt ist, die zu kochende Speise aufzunehmen, und einer unterer Fläche (22), die dazu bestimmt ist, einem Kocher zugewandt zu werden; wobei die obere Fläche (21) des Bodens (2) einen zentralen Anteil (21 a) und einen peripheren Anteil (21 b) umfasst,
- mehrere Rippen (104), die in dem zentralen Anteil derart herausgearbeitet sind, dass mehrere Nuten (4) definiert werden, die eine zum peripheren Anteil (21 b) des Bodens (2) hin zunehmende Tiefe aufweisen,
- ein seitlicher Rand (3) mit mindestens einem Durchgangsablaufloch (33);
- mindestens eine Sammelwanne (6), die einen V-förmigen Raum aufweist und außerhalb des seitlichen Randes (3) an dem mindestens einen Durchgangsloch (33) angeordnet ist,
**dadurch gekennzeichnet, dass** er Folgendes umfasst:
Schnellkupplungsmittel (8; 9), um die Sammelwanne (6) schnell in den Behälter einkuppeln bzw. auskuppeln zu können,
einen Abstandhalterflansch (150), der aus dem seitlichen Rand (3) des Behälters nach außen auskragt, um die Sammelwanne (6) vom Behälter derart zu beabstanden, dass der Wärmeaustausch zwischen dem Behälter und der Sammelwanne (6) minimiert wird.

2. Kochbehälter (1) nach Anspruch 1, umfassend mindestens einen Verbindungsschaft (5), der an dem mindestens einen Durchgangsloch (33) des seitlichen Randes (3) angeordnet ist und aus dem seitlichen Rand (3) nach außen auskragt; wobei der Abstandhalterflansch (150) auf dem Verbindungsschaft (5) herausgearbeitet ist und wobei die Sammelwanne (6) eine Öffnung (A) aufweist, die den Verbindungsschaft (5) derart aufnimmt, dass das Fett in die Sammelwanne (6) tropfen kann, ohne zwischen die Sammelwanne (6) und den seitlichen Rand (3) des Behälters zu fließen.

3. Kochbehälter (1) nach Anspruch 2, wobei der Verbindungsschaft (5) quaderförmig ist und zwei seitliche vertikale Nuten (53) sowie eine untere horizontale Nut (54) umfasst und die Öffnung (A) der Wanne U-förmig ist und eine horizontale Kante (60a) sowie zwei seitliche vertikale Kanten (60b) umfasst, die jeweils die untere horizontale Nut (54) und die seitlichen vertikalen Nuten (53) des Verbindungsschafts in Eingriff nehmen, wobei der Abstandhalterflansch (150) zwischen den Nuten (53, 54) des Verbindungsschafts und den seitlichen Rand (3) des Behälters angeordnet ist.

4. Kochbehälter (1) nach Anspruch 2 oder 3, wobei die Schnellkupplungsmittel (9) einen tellerförmigen Deckel umfassen, der mit einem hinteren Flügel (91) versehen ist, der auf einer oberen Wand (50) des Verbindungsschafts gleitet.

5. Kochbehälter (1) nach Anspruch 4, wobei die Sammelwanne (6) eine vordere Wand (62) umfasst, die mit einer oberen Kante (62a) versehen ist, und der Deckel einen vorderen Flügel (93) umfasst, der mit einem Sperrzapfen (94) versehen ist, der nach unten auskragt, um über die obere Kante (62a) der Vorderwand der Sammelwanne (6) hinauszugehen und an der Innenfläche der Vorderwand (62) der Sammelwanne auf Anschlag zu gehen.

6. Kochbehälter (1) nach Anspruch 5, wobei die Vorderwand (62) der Sammelwanne (6) zwei Einschnitte (162) zum Einstecken des Deckels (9) und zwei seitliche Flügel (163) umfasst, die oberhalb der Einschnitte (162) ins Innere der Sammelwanne auskragen, um den Deckel zu halten.

7. Kochbehälter (1) nach Anspruch 2 oder 3, bei dem die Schnellkupplungsmittel (8) einen Zapfen umfassen, der in zwei auf den beiden Seitenwänden der Sammelwanne (6) herausgearbeitete, gefluchtete Löcher (7) einfällt und eine obere, horizontale Nut (52) in Eingriff nimmt, die auf dem Verbindungsschaft (5) herausgearbeitet ist.

8. Kochbehälter (1) nach einem beliebigen der vorstehenden Ansprüche, wobei jede Rippe (104) eine zum peripheren Anteil (21 b) hin abnehmende Breite und jede Nut (4) eine zum peripheren Anteil (21 b) hin zunehmende Breite aufweist, um den Durchlauf und die Geschwindigkeit des zum peripheren Anteil des Behälters hin ablaufenden Fettes zu erhöhen.

9. Kochbehälter (1) nach einem beliebigen der vorstehenden Ansprüche, wobei die Rippen (104) und die Nuten (4) im Querschnitt ein S-förmiges Profil aufweisen, um keine scharfen Kanten zu bilden, und wobei jede Rippe (104) zwei Seitenwände (140) aufweist, die bezogen auf eine vertikale Gerade in einem Winkel (α) geneigt sind, damit das Fett besser ablaufen kann.

10. Kochbehälter (1) nach einem beliebigen der vorstehenden Ansprüche, umfassend zwei Sammelwannen (6), die in diametral gegenüberliegenden Stellungen angeordnet sind, und zwei Griffe (M), die in diametral gegenüberliegenden Stellungen und - bezogen auf die Sammelwannen - im Winkel von 90° beabstandet angeordnet sind.

## Revendications

1. Récipient de cuisson (1) comprenant:
- une paroi de fond (2) qui présente une face supérieure (21) destinée à accueillir la nourriture à cuisiner et une face inférieure (22) destinée à être tournée vers une plaque de cuisson ; ladite face supérieure (21) de ladite paroi de fond (2) comprenant une portion centrale (21 a) et une portion périphérique (21 b),
- une pluralité de nervures (104) réalisées sur ladite portion centrale de manière à définir une pluralité de rainures (4) ayant une profondeur croissante dans la direction de ladite portion périphérique (21 b) de ladite paroi de fond (2),
- un rebord latéral (3) ayant au moins un trou passant (33) de vidage ;
- au moins une cuvette de récolte (6) ayant un compartiment (V) disposé à l'extérieur du ledit rebord latéral (3), en correspondance du dit au moins un trou passant (33),
**caractérisé en ce qu'**il comprend
des moyens d'accrochage et de décrochage rapide (8 ; 9) pour permettre l'accrochage et le décrochage rapide de la cuvette de récolte (6) par rapport au récipient,
une bride d'espacement (150) qui déborde à l'extérieur du rebord latéral (3) du récipient pour éloigner la cuvette de récolte (6) du récipient même, de manière à minimiser l'échange thermique entre le récipient et la cuvette de récolte.

2. Récipient de cuisson (1) selon la revendication 1, comprenant au moins une languette de connexion (5) disposée en correspondance du dit au moins un trou passant (33) du dit rebord latéral et débordant à l'extérieur du dit rebord latéral (3) ; ladite bride d'espacement (150) étant réalisée sur la languette de connexion (5) et ladite cuvette de récolte (6) ayant une ouverture (A) qui accueille ladite languette de connexion (5) de façon que la graisse tombe dans la cuvette de récolte sans s'écouler entre la cuvette de récolte et le rebord latéral (3) du récipient.

3. Récipient de cuisson (1) selon la revendication 2, où ladite languette de connexion (5) a la forme d'un parallélépipède et comprend deux rainures latérales verticales (53) et une rainure horizontale inférieure (54) et ladite ouverture (A) de la cuvette a la forme d'un « U » et comprend un bord horizontal (60a) et deux bords latéraux verticaux (60b) qui s'engagent respectivement dans la rainure horizontale inférieure (54) et dans les rainures latérales verticales (53) de la languette de connexion, où ladite bride d'espacement (150) est disposée entre les rainures (53, 54) de la languette de connexion et le rebord latéral (3) du récipient.

4. Récipient de cuisson (1) selon la revendication 2 ou 3, où lesdits moyens d'accrochage/décrochage rapide comprennent un couvercle (9) en forme de plaque équipé d'une ailette postérieure (91) qui coulisse sur une paroi supérieure (50) de la languette de connexion.

5. Récipient de cuisson (1) selon la revendication 4, où ladite cuvette de récolte (6) comprend une paroi antérieure (62) dotée d'un bord supérieur (62a) et ledit couvercle comprend une ailette antérieure (93) équipée d'un pivot de blocage (94) débordant inférieurement pour surmonter le bord supérieur (62a) de la paroi antérieure de la cuvette de récolte et aller en battement contre la surface interne de la paroi antérieure (62) de la cuvette de récolte.

6. Récipient de cuisson (1) selon la revendication 5, où ladite paroi antérieure (62) de la cuvette de récolte (6) comprend deux entailles (162) aptes à consentir l'introduction du couvercle (9) et deux ailettes latérales (163) qui débordent vers l'intérieur de la cuvette de récolte, au-dessus des entailles (162), de façon à retenir le couvercle.

7. Récipient de cuisson (1) selon la revendication 2 ou 3, où lesdits moyens d'accrochage/décrochage rapide (8) comprennent un pivot qui s'insère dans deux trous (7) alignés, réalisés sur deux parois latérales de la cuvette de récolte, (6) et s'engage dans une rainure horizontale supérieure (52) réalisée sur ladite languette de connexion (5).

8. Récipient de cuisson (1) selon l'une quelconque des revendications précédentes, où chaque nervure (104) a une ampleur décroissante dans la direction de ladite portion périphérique (21 b) et chaque rainure (4) a une ampleur croissante dans la direction de ladite portion périphérique (21 b), de façon à augmenter le débit et la vitesse de la graisse qui s'écoule vers la portion périphérique du récipient.

9. Récipient de cuisson (1) selon l'une quelconque des revendications précédentes, où les nervures (104) et les rainures (4) ont un profil sinusoïdal vu en section transversale, afin de ne pas former des arêtes vives et chaque nervure (104) présente deux parois latérales (140) inclinées d'un angle (α) par rapport à une ligne droite verticale de façon à favoriser l'écoulement de la graisse.

10. Récipient de cuisson (1) selon l'une quelconque des revendications précédentes, comprenant deux cuvettes de récolte (6) disposées en positions diamétralement opposées, et deux manches (M) disposés en positions diamétralement opposées et espacés angulairement de 90° par rapport aux cuvettes de récolte.
